# EUROPEAN PATENT SPECIFICATION

(11) **EP 3 252 191 B1**
(45) Date of publication and mention of the grant of the patent: **06.05.2020**
(21) Application number: 17172853.8
(22) Date of filing: 24.05.2017
(51) Int. Cl.: C25D 15/00, C25D 7/10, C25D 3/30, F16C 33/06, B22D 15/02, B22D 19/08, F16C 9/02, F16C 33/12, F16C 33/20

(54) **SLIDING COMPONENT AND METHOD**
GLEITKOMPONENTE UND VERFAHREN
COMPOSANT COULISSANT ET PROCÉDÉ

(30) Priority: 02.06.2016 GB 201609679
(43) Date of publication of application: 06.12.2017
(73) Proprietor: Mahle International GmbH, 70376 Stuttgart (DE); Mahle Engine Systems UK Limited, Rugby, Warwickshire CV23 0WE (GB)
(72) Inventor: CAREY, John, NN18 8JP Corby, Northhamptonshire (GB); CHANG, Isaac, B30 1BQ Birmingham (GB); GORGES, Roger, GL56 0JT Moreton-in-Marsh Gloucestershire (GB); LAING, Ian, CV21 2QG Rugby, Warwickshire (GB); LATHAM, David, SY2 5ER Shrewsbury, Shropshire (GB)
(74) Representative: BRP Renaud & Partner mbB Rechtsanwälte Patentanwälte Steuerberater

(56) References cited:
- GB-A- 2 497 520
- GB-A- 2 522 035
- JP-A- 2005 097 704
- RU-C2- 2 359 051
- US-A- 5 045 405
- US-A1- 2001 016 267
- US-A1- 2003 012 977
- US-A1- 2003 095 731

## Description

The invention relates to a sliding component and a method for making a sliding component. In particular, the invention relates to an overlay of a sliding component and a method for making the overlay. The sliding component may be a sliding component for an engine, such as a bearing, a bearing shell, a bush, a thrust washer, a journal bearing or the like.

### Background

In an internal combustion engine, each main-bearing assembly typically comprises a pair of half bearings retaining a cylindrical journal of a crankshaft. Each half bearing comprises a semi-cylindrical bearing shell. The bearing shells typically have a layered construction in order to provide the required mechanical performance. A strong backing material provides structural strength, and is coated with one or more layers having preferred tribological properties to provide a bearing surface that faces and supports the cooperating crankshaft journal. The backing is usually of steel, of thickness 1mm or more, and is coated with or bonded to a lining layer (which may comprise more than one individual layer), and an overlay which faces the crankshaft journal. The lining layer typically comprises a copper-based material (e.g. copper-tin bronze) or an aluminium-based material (such as aluminium or an aluminium-tin alloy) adhered to the backing either directly or through an intermediate layer, and is of thickness from about 0.05 to 0.5 mm. The overlay may be of a plastic polymer-based layer, deposited by spraying, or a metal layer such as a layer of a lead-tin (Pb-Sn) alloy deposited by sputtering or electroplating. The overlay may be separated from the lining layer by a diffusion barrier in the form of an interlayer, for example of nickel.

The function of the overlay is to provide a relatively soft, conformable layer that can accommodate any small misalignments between the harder steel crankshaft journal and the bearing shells, and receive and embed dirt particles that may circulate in the oil supply and enter the bearing, so as to prevent damage to or scoring of the journal. These functions of the overlay are respectively termed conformability and embedability.

These functions require the overlay to be relatively soft and deformable, but at the same time sufficiently robust to provide a bearing surface having a long lifetime, without cracking due to overloading or fatigue and without unacceptable wear.

A particular challenge to the performance of overlays has arisen in recent years from the fuel-saving configuration of modern vehicle engines to "stop-start" operation. Although engine bearings are conventionally hydrodynamically lubricated during use, little or no lubrication may be provided to the bearings when an engine starts. Accordingly, stop-start operation of an engine places increased demands upon the performance of the bearings, and in particular the performance of overlays.

Lead-tin alloys are known to provide effective materials for overlays, but there is pressure on engine designers to eliminate lead from engines, including from wear components. Therefore, designers have looked for alternatives.

One option to eliminate lead might be to use pure tin (Sn), which is typically soft enough to provide good conformability and embedability, but at the cost of high wear rates.

A factor in increasing the wear resistance of an electroplated tin layer is proposed in GB2522035. The microstructure of a tin layer, and particularly its grain morphology, can be controlled by controlling the electroplating conditions, and the grain morphology affects the physical properties of the tin layer. One morphology comprises columnar grains, in which an aspect ratio of the grains (which may be evaluated as a ratio of a mean grain size perpendicular to the substrate of the electroplated layer to a mean grain size parallel to the substrate) is large. Such a layer has relatively high hardness and wear resistance. This type of layer is termed a bright tin layer, because its surface tends to be shiny or reflective. Another morphology comprises equiaxed grains, typically of smaller size. This provides a layer of lower hardness, providing greater conformability and embedability than a layer comprising columnar grains, but suffers from unacceptably high wear rates. This type of layer is termed a dull tin layer, because it has a matt, non-reflective surface. GB2522035 proposes a composite overlay structure, having a dull tin layer electroplated over an underlying bright tin layer. This structure is achieved, for example, by depositing the underlying layer using direct current (DC) plating, and changing to a pulsed cathodic bias to deposit the dull tin layer.

Another technique that a designer might consider to increase the wear resistance of an overlay of a soft material such as tin is to incorporate hard particles into the overlay, for example to produce a matrix of tin reinforced by the harder particles. However it is desirable to form a tin overlay by electroplating, and it is well known that there is a problem in trying to incorporate hard particles into such an electroplated layer. Usually, any hard particles mixed into an electroplating solution will simply be rejected by the dendrites of metal that grow from the cathode as the metal layer is electroplated, with the result that the hard particles are not incorporated into the electroplated metal layer.

An attempt to solve this problem is described in patent publication GB2497520, which describes an approach to incorporate hard particles of TiCN, SiC, NbC, SbN₄, Al₂O₃, TiN or B₄C during electroplating of a tin overlay. GB2497520 describes the problem that the skilled person has faced in seeking to incorporate such particles into electrodeposited tin, namely that the particles are continually rejected from the tin layer as it is electrodeposited, and are not co-deposited into the layer. A reason for this is explained in GB2497520, which is that the rate of metallic deposition under a constant cathodic current is limited by the ionic mobility of the metal ions (i.e. tin ions), due to the presence of a depletion region in the electrolyte close to the cathode surface. Although hard particles suspended in the electrolyte can temporarily adhere onto the electroplating cathode surface, the slow deposition of the metal ions that occurs under constant cathodic current is found to be inefficient at incorporating these surface particles into the deposited layer, with the particles instead remaining on the layer surface as the metal layer grows. GB2497520 offers a solution to this problem, by applying a pulsed or alternating electroplating potential. In that case, it is proposed that during zero cathodic bias portions of the electroplating potential (or during lower cathodic bias portions, or during anodic bias portions), the concentration of metal ions close to the cathode surface is able to increase, leading to a rapid burst of metal deposition during intervening high cathodic bias portions, which increases the efficiency of incorporation of the hard particulate into the deposited layer. However, the incorporation of the hard particles and the use of a pulsed or alternating deposition potential prevent the formation of a columnar grain structure, so that the tin matrix is a dull tin layer rather than a more robust bright tin layer.

Although attempts have thus been made to improve the performance of tin overlays for sliding components, there is still a significant demand for improved overlay performance.

### Summary of the Invention

The invention provides a sliding component and a method for forming an overlay of a sliding component as defined in the appended independent claims, to which reference should now be made. Preferred or advantageous features of the invention are set out in dependent subclaims.

In a first aspect, the invention may thus provide a sliding component in which an overlay comprises intermetallic particles in an electroplated matrix comprising Sn. The intermetallic particles comprise an aluminide, and preferably a nickel aluminide such as Ni₃Al.

In the prior art, attempts have been made to increase the hardness of electroplated tin by incorporating hard particles. As described above, this includes the incorporation of carbides, nitrides and oxides, namely TiCN, SiC, NbC, SbN₄, Al₂O₃, TiN or B₄C. These ceramic materials are of high hardness. The hardness of B₄C, for example, is greater than 18GPa. However, the incorporation of these particles has not been sufficiently effective to date. In order to improve the performance of such layers, the skilled person might consider incorporating harder particles (to enhance the wear resistance of the overlay), but the inventors in the present case have surprisingly found that a more successful approach is to incorporate softer particles, of hardness in the range 3 to 15 GPa. This is somewhat counterintuitive, but the inventors' experiments have found that improved wear resistance has been achieved by incorporating intermetallic particles, rather than the ceramic particles used in the prior art, and namely by incorporating aluminides, or preferably nickel aluminides, or particularly preferably Ni₃Al.

In the sliding component overlay, the electroplated Sn has a columnar grain structure, with the columnar grains advantageously perpendicular to the substrate of the overlay and to a bearing surface of the overlay.

In such a bright tin layer, an aspect ratio of the grains, evaluated as a ratio of a mean grain size perpendicular to the surface of the overlay to a mean grain size parallel to a surface of the overlay, is greater than 1, preferably greater than 3, and particularly preferably greater than 5. The aspect ratio may be higher, and as much as greater than 10 or 20, or in the range 20 to 30. A bright tin layer may have a micro hardness of between 12 and 22 MHK1 (Knop micro hardness). It is preferable to maintain the columnar structure of bright tin, to provide a layer having advantageously high fatigue strength.

The overlay is therefore preferably of bright electroplated tin.

As described above, in the prior art it has been found that a bright tin layer is more wear resistant than a dull (non-bright) tin layer, and it has been found that incorporating hard particles into layers of tin and other materials may increase the hardness and wear resistance of those layers, but that attempts to co-deposit tin and hard particles, for example by applying pulsed electrodeposition potentials, have disrupted the growth of the columnar structure required for a bright tin layer. By contrast, in embodiments of the present invention, the inventors have surprisingly found that when intermetallic particles rather than ceramic particles are used, the columnar structure of the electroplated tin layer is not disrupted when particles are incorporated.

Without limiting the scope of the invention, it is believed by the inventors that the reason for the incorporation of the particles without affecting the bright tin deposition is that the zeta potential of the particles in the electroplating solution is lower (less negative) than for the ceramic particles conventionally used in the prior art. For example, the zeta potential for Ni₃Al particles in a sulphuric acid based tin-electroplating solution is less than -50mV.

This may provide an effective way to identify intermetallic materials that are suitable for incorporation into electroplated tin and tin alloys. A low zeta potential, between 0 and +/-5mV, is associated with rapid coagulation of particles in a liquid. A much higher zeta potential, of more than +/-60mV, is associated with particles that are very stable, as individual particles, within a liquid and which are resistant to coagulation or flocculation. In typical electroplating solutions for tin and tin alloys, conventional hard particles such as the carbide and nitride ceramics used in the prior art have high zeta potentials of the order of +/-50mV or more. The intermetallics proposed in the present invention have significantly lower zeta potentials in such electroplating solutions, in the range +/-10 to +/- 50mV, and the inventors have found that these particles are much more effectively incorporated into electroplated overlays.

Therefore, in embodiments of the invention, particles for incorporation into electroplated tin or tin-alloy overlays should advantageously have zeta potentials in the electroplating solution of greater than +/-10 or +/-20mv, and/or less than +/-30, +/-40, or +/-50mV.

In embodiments of the invention, tin-based alloys (alloys containing more than 50wt% tin) may be used for the matrix of the overlay, but it is preferred that the matrix be of pure tin, apart from incidental impurities which arise from the electroplating process. If a tin alloy is to be used, options include tin-copper, tin-silver, tin-gold, tin-antimony, tin-cobalt, tin-nickel, tin-bismuth, tin-indium, tin-iron, tin-zinc and tin-manganese or combinations of these. In particular, it is preferred that the electroplated matrix is Pb-free.

It may be preferable to use an overlay comprising a single metal, i.e. tin, in order to avoid problems that can arise from diffusion of elements within the bearing structure during high temperature operation of a bearing. Using a single metal may prevent changes in the properties of the overlay that can arise if, for example, one of the components of an alloy overlay diffuses away from the overlay into the lining layer during long-term, high-temperature operation. Preferably, the overlay is of thickness greater than 5, or 7, or 10 micrometres, and/or less than 15, or 20, or 25 micrometres, and the intermetallic particles may have an average size greater than 0.5, or 1 or 2 or 3 micrometres, and/or less than 4, or 5, or 6, or 8, or 10, or 12 micrometres. The intermetallic particles may be of any shape, but preferably have an aspect ratio (between their longest and shortest dimensions) of less than 4, or less than 2, and preferably are equiaxed (aspect ratio approximately equal to 1). For example, the intermetallic particles may be atomised particles, or may be prepared by grinding or milling. The inventors have found that spherical intermetallic particles, for example prepared by atomisation, are particularly preferred because, it is believed, they may be more effective than other particle shapes in introducing less stress into the tin matrix during use, and avoiding introducing initiation points for fatigue cracking of the tin matrix.

In a preferred embodiment, the intermetallic particles form more than 0.1 or 0.25 or 0.5 wt% and/or less than 0.75 or 1.0 or 2.5 wt% of the overlay.

In a further aspect, the present disclosure may provide a method for forming an overlay of a sliding component, the overlay comprising intermetallic particles in an electroplated matrix comprising Sn, the method comprising the steps of mixing particles of an intermetallic compound with an electroplating solution for electrodeposition of Sn or a Sn alloy and co-depositing the intermetallic compound and the Sn or Sn alloy onto a substrate.

The intermetallic particles preferably comprise an aluminide, or a nickel aluminide, or Ni₃Al. The deposition of the intermetallic particles preferably does not disrupt deposition of the electroplated Sn or Sn alloy, in that the structure of the matrix of tin or tin alloy is the same as if the intermetallic particles were not present in the electroplating solution, under the same electroplating conditions.

### Description of Specific Embodiments of the Invention

Specific embodiments of the invention will now be described, by way of example, with reference to the accompanying drawings in which:
Figure 1 is a three-quarter view of a semi-cylindrical bearing shell, incorporating an overlay embodying the invention;
Figure 2 is a metallurgical cross section of a bearing incorporating an overlay comprising intermetallic particles in an electroplated tin matrix;
Figure 3 is a scanning electron microscope (SEM) image of a surface of the overlay of figure 2;
Figure 4 is a high contrast SEM image of a cross section of an electrodeposited overlay of tin containing Ni₃Al particles, showing that the grain structure of the electrodeposited tin is not affected or disrupted by the incorporation of the particles; and
Figure 5 is a graph showing volume loss of material (wear) in tests of two different overlays, including one overlay embodying the invention.

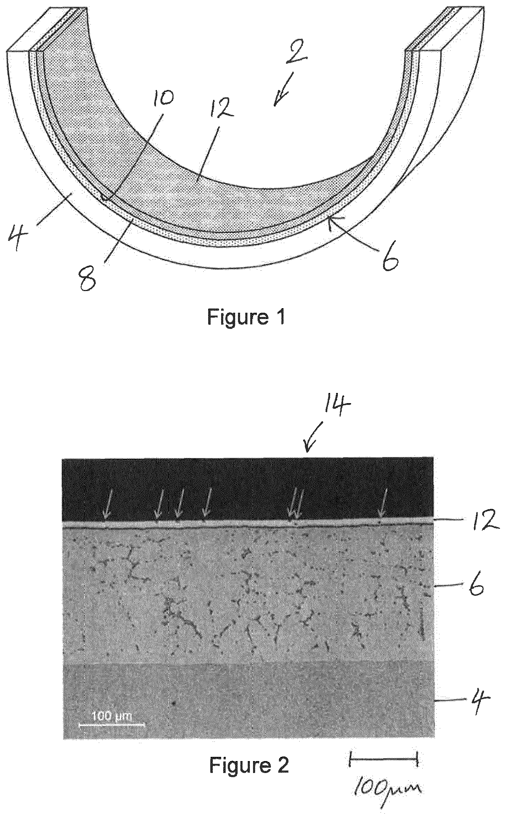

Figure 1 shows a half bearing, or semi-cylindrical bearing shell 2 for a main bearing assembly of an internal combustion engine, for retaining a cylindrical journal of a crankshaft. This half bearing comprises a semi-cylindrical bearing shell. The bearing shell has a layered construction incorporating a steel backing 4. The backing is coated with or bonded to a lining layer 6 comprising a layer 8 of copper-tin bronze and a nickel diffusion barrier, or interlayer, 10. An overlay 12 is formed by electroplating onto the interlayer.

The overlay comprises particles of Ni₃Al in a tin matrix, formed by electroplating onto the interlayer. The interlayer is arranged as a cathode in a bath containing an electroplating electrolyte and an anode, and a cathodic bias (i.e. a negative bias) is applied to the cathode relative to the anode. The cathodic bias drives positively-charged metallic ions, such as tin, towards the cathode, and deposits the metallic ions onto the cathode surface in known manner. The anode is preferably formed of a material corresponding to the metallic layer that is to be deposited. For example, when depositing a layer of pure tin (apart from incidental impurities), it is preferable to use a pure tin anode. In other embodiments, the overlay matrix may be of a tin alloy, in which case the anode may be of an appropriate alloy composition.

The electrolyte may additionally comprise performance-enhancing additives, such as brighteners and anti-foaming agents. The deposited tin or tin alloy layer may therefore contain incidental impurities, as the skilled person would appreciate. The chemical composition and pH of the electrolyte are maintained during deposition by replenishment of the chemicals consumed from the electrolyte. The electrolyte may be maintained at a temperature of 20 to 30 °C. Advantageously, the electroplating conditions may follow conventional practice.

Ni₃Al particles are mixed with the electrolyte either before or during the electroplating process. More particles may be added during electroplating if required to replace particles that have been incorporated into the overlay. The particles are preferably formed by atomisation, are generally spherical in shape, and are between 1 and 4 micrometres in diameter. In preferred embodiments the particles may be between 1 and 10 micrometres in diameter, or preferably between 2 and 5 micrometres in diameter, and particularly preferably between 2 and 3 micrometres in diameter. Particles outside these ranges may be present, but particles greater than the thickness of the desired overlay should be avoided, as they may protrude unacceptably from the overlay, and particles much smaller than 1 micrometre may be difficult to handle in an industrial process. For example, small particles may be pyrophoric.

The Ni₃Al particles do not react with the electrolyte, and are maintained suspended in, or mixed throughout, the electrolyte in order to ensure that they are incorporated into the overlay as it is formed. To do this, the electrolyte should be mixed or agitated. Magnetic mixing or agitation should be avoided, as the nickel in the intermetallic particles is magnetic.

A first exemplary electrolyte is a lead-free, tin methanesulfonic acid (MSA) electrolyte (tin ions in methanesulfonic acid) comprising a solution of:
- 30 to 60 g/l tin, although concentrations of 15 to 80 g/l may be used;
- 100 to 200 g/l methanesulfonic acid;
- 3 to 6 ml/I brightener (35 to 50 wt% 2-isopropoxyethanol, and 5 to 10 wt% 4-15 phenylbut-3-en-2-one);
- 40-80 ml/I starter (20 to 25 wt% 2-naptholpolyglycolether, 1 to 2.5 wt% 1 ,2-dihydroxybenzene, and 1 to 2.5 wt% methacrylic acid);
- Ni₃Al particles 1 g/l; and
- balance to 1l of deionised water.

A second exemplary electrolyte is a lead-free, tin sulfuric acid electrolyte (tin ions in sulphuric acid) comprising a solution of:
- 10 to 50 g/l tin;
- 170 to 190 g/l sulphuric acid;
- 2 to 6 ml/l brightener;
- 10 to 30 g/l make-up;
- 2 to 6 ml/l starter;
- Ni₃Al particles 1 g/l; and
- balance to 1l of deionised water.

The overlay is advantageously deposited by direct current (DC) plating, as in a conventional plating process. Electroplating is carried out in galvanostatic mode at a cathode current density between 1.5 and 2.0 Adm⁻²; the electroplating voltage is therefore dictated by the current density and the resistivity of the electrolyte. The intermetallic particles are co-deposited with the metallic ions, which form a metallic matrix in which the particles are distributed. The particles may be suspended in the electrolyte with a concentration of approximately 2 g/l and preferably 1 to 20 g/l. Ultrasonic and/or mechanical stirring or agitation is used to maintain the particulate in suspension during deposition.

Figures 2, 3 and 4 are images of the overlay deposited as described above.

Figure 2 is a light-microscopy image of a transverse section through the half bearing of Figure 1, showing the overlay 12, the lining layer 6 and the backing 4. The section shows the intermetallic particles 14 (indicated by arrows in the drawing) incorporated into the tin matrix of the overlay. Atomic absorption analysis shows that the overlay contains 0.2 wt% Ni₃Al.

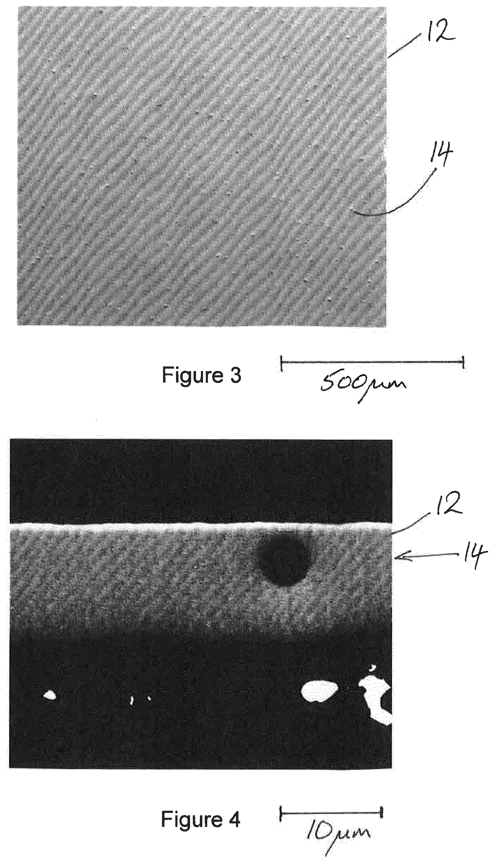

Figure 3 is a scanning-electron microscopy (SEM) image of the bearing surface of the overlay, after electroplating. Intermetallic particles 14 incorporated at and just beneath the surface of the overlay can be seen. This image does not show intermetallic particles that are fully incorporated deeper beneath the surface of the overlay.

Figure 4 is a high-contrast SEM image of a section through the overlay 12, at a higher magnification than the section in Figure 2. This section shows that the thickness of the overlay is about 12 micrometres, and shows the location within the thickness of the overlay of a spherical intermetallic particle 14 of about 4 micrometres diameter. The columnar grain structure of the tin matrix of the overlay can also be seen from the vertical texturing of the imaged surface, through the thickness of the overlay and, importantly, it can be seen that the columnar grain structure is not disrupted by the incorporated intermetallic particle. The columnar grain structure can be seen in the region of the tin electroplate immediately above the incorporated particle and to either side of the incorporated particle, in exactly the same way as in the region between the particle and the lining layer (or substrate) beneath the particle. This is very different from the skilled person's experience in the prior art of seeking to incorporate hard ceramic particles into electroplated tin, where the particles disrupted and prevented the formation of a columnar grain structure.

Advantageously, therefore, the overlay illustrated in Figures 2, 3 and 4 is a bright tin layer.

In the overlay, the columnar grains have an aspect ratio defined by the length of the grains in the direction perpendicular to the surface of the substrate (i.e. in the growth direction during electroplating) relative to the width of the grains in the direction parallel to the surface of the substrate. As shown in Figure 4, the grain structure of the electroplated layer is columnar (with column-like grains extending away from the substrate) and the grains have an aspect ratio of approximately 10:1. Advantageously, grains having higher aspect ratios (e.g. columnar grains) have higher strength, and higher load carrying capacity, by comparison to the equiaxed grains of dull tin electroplate.

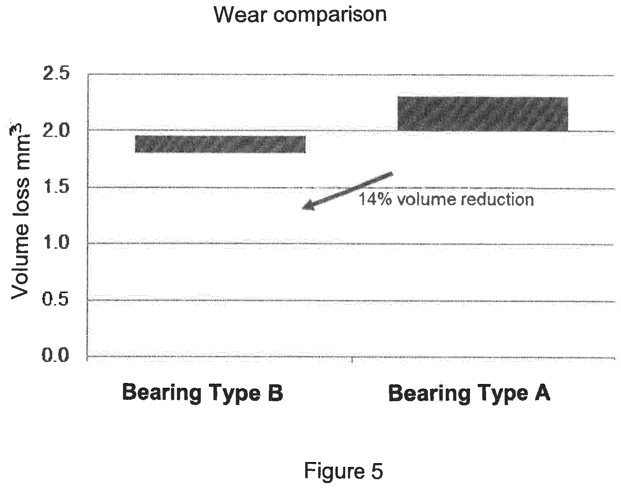

The improved performance of embodiments of the invention have been demonstrated by accelerated wear testing, as illustrated in Figure 5. These tests were carried out using a test rig in which a single half bearing is arranged facing upwardly, and an electrically-driven revolving eccentric test journal is loaded downwardly into the half bearing. The eccentrically-mounted journal is offset from its axis of rotation by about 1.8mm, to achieve 3.64mm TIR (total indicator reading) and is nominally 6.7mm smaller than the test-bearing bore, to generate a large clearance so that the shaft's eccentricity is accommodated within the half bearing. The bearing is lubricated by a spray bar located above the leading side of the bearing clearance. This wear test provides a repeatable set of conditions for comparing different overlays, and to ensure statistical robustness, at least six of each type of bearing is tested.

Two types of bearings were tested under the same conditions, termed bearings A and B in Figure 5. Type A was a bearing having an electroplated overlay of bright tin. Type B was a bearing comprising an overlay embodying the invention, as described above, having a electroplated overlay of bright tin the same as that of Type A except that it contained 0.2 wt% Ni₃Al particles. Under the same wear-test conditions, the Type A bearing lost 2.2mm³, and the Type B bearing lost only 1.9mm³. The bearing embodying the invention therefore displayed significantly better wear resistance than the reference bearing.

Although described herein and illustrated in the drawings in relation to a half bearing shell, the present invention may equally apply to other sliding engine components, including semi-annular, annular or circular thrust washers, and bushes, and engines comprising such sliding engine components.

## Claims

1. A sliding component in which:
an overlay comprises intermetallic particles in a matrix comprising Sn,
**characterized in that** the intermetallic particles comprise an aluminide, the matrix comprising Sn is electroplated and the electroplated Sn has a columnar grain structure.

2. A sliding component according to claim 1, in which the intermetallic particles comprise a nickel aluminide.

3. A sliding component according to claim 1 or 2, in which the intermetallic particles comprise Ni₃Al.

4. A sliding component according to any preceding claim, in which the columnar grains are perpendicular to a surface of the overlay.

5. A sliding component according to claim 4, in which an aspect ratio of the grains, evaluated as a ratio of a mean grain size perpendicular to a surface of the overlay to a mean grain size parallel to a surface of the overlay, is greater than 3, and preferably greater than 5.

6. A sliding component according to any preceding claim, in which the electroplated matrix consists of Sn, apart from incidental impurities.

7. A sliding component according to any preceding claim, in which the electroplated matrix is Pb-free.

8. A sliding component according to any preceding claim, in which the overlay is of thickness between 10 and 20 micrometres.

9. A sliding component according to any preceding claim, in which the intermetallic particles have an average size between 1 and 10 micrometres.

10. A sliding component according to any preceding claim, in which the intermetallic particles have an aspect ratio of less than 2, and preferably are equiaxed.

11. A sliding component according to any preceding claim, in which the intermetallic particles are atomised particles.

12. A sliding component according to any preceding claim, in which the intermetallic particles form between 0.1 and 1.0 wt% of the overlay.

## Patentansprüche

1. Gleitkomponente, bei der:
eine Beschichtung intermetallische Teilchen in einer Sn umfassenden Matrix umfasst,
**dadurch gekennzeichnet, dass** die intermetallischen Teilchen ein Aluminid umfassen, die Sn umfassende Matrix galvanisiert ist und das galvanisierte Sn eine säulenförmige Kornstruktur aufweist.

2. Gleitkomponente nach Anspruch 1, bei der die intermetallischen Teilchen ein Nickelaluminid umfassen.

3. Gleitkomponente nach Anspruch 1 oder 2, bei der die intermetallischen Teilchen Ni₃Al umfassen.

4. Gleitkomponente nach einem der vorstehenden Ansprüche, bei der die säulenförmigen Körner senkrecht zu einer Oberfläche der Beschichtung sind.

5. Gleitkomponente nach Anspruch 4, bei der ein Seitenverhältnis der Körner, das als ein Verhältnis einer mittleren Korngröße senkrecht zu einer Oberfläche der Beschichtung zu einer mittleren Korngröße parallel zu einer Oberfläche der Beschichtung bewertet wird, größer als 3 und bevorzugt größer als 5 ist.

6. Gleitkomponente nach einem der vorstehenden Ansprüche, bei der die galvanisierte Matrix aus Sn besteht, abgesehen von zufälligen Verunreinigungen.

7. Gleitkomponente nach einem der vorstehenden Ansprüche, bei der die galvanisierte Matrix Pb-frei ist.

8. Gleitkomponente nach einem der vorstehenden Ansprüche, bei der die Beschichtung von einer Dicke zwischen 10 und 20 Mikrometer ist.

9. Gleitkomponente nach einem der vorstehenden Ansprüche, bei der die intermetallischen Teilchen eine durchschnittliche Größe zwischen 1 und 10 Mikrometer aufweisen.

10. Gleitkomponente nach einem der vorstehenden Ansprüche, bei der die intermetallischen Teilchen ein Seitenverhältnis von weniger als 2 aufweisen und bevorzugt gleichachsig sind.

11. Gleitkomponente nach einem der vorstehenden Ansprüche, bei der die intermetallischen Teilchen zerstäubte Teilchen sind.

12. Gleitkomponente nach einem der vorstehenden Ansprüche, bei der die intermetallischen Teilchen zwischen 0,1 und 1,0 Gew.-% der Beschichtung bilden.

## Revendications

1. Composant coulissant dans lequel :
un recouvrement comprend des particules intermétalliques dans une matrice comprenant du Sn, **caractérisé en ce que** les particules intermétalliques comprennent un aluminure, la matrice comprenant du Sn est électroplaquée et le Sn électroplaqué a une structure de grains colonnaires.

2. Composant coulissant selon la revendication 1, dans lequel les particules intermétalliques comprennent un aluminure de nickel.

3. Composant coulissant selon la revendication 1 ou 2, dans lequel les particules intermétalliques comprennent du Ni₃Al.

4. Composant coulissant selon une quelconque revendication précédente, dans lequel les grains colonnaires sont perpendiculaires à une surface du recouvrement.

5. Composant coulissant selon la revendication 4, dans lequel un rapport d'aspect des grains, évalué en tant que rapport d'une taille de grain moyenne perpendiculaire à une surface du recouvrement à une taille de grain moyenne parallèle à une surface du recouvrement, est supérieur à 3, de préférence supérieur à 5.

6. Composant coulissant selon une quelconque revendication précédente, dans lequel la matrice électroplaquée est constituée de Sn, en dehors d'impuretés fortuites.

7. Composant coulissant selon une quelconque revendication précédente, dans lequel la matrice électroplaquée est exempte de Pb.

8. Composant coulissant selon une quelconque revendication précédente, dans lequel le recouvrement a une épaisseur comprise entre 10 et 20 micromètres.

9. Composant coulissant selon une quelconque revendication précédente, dans lequel les particules intermétalliques ont une taille moyenne comprise entre 1 et 10 micromètres.

10. Composant coulissant selon une quelconque revendication précédente, dans lequel les particules intermétalliques ont un rapport d'aspect de moins de 2 et sont de préférence équiaxes.

11. Composant coulissant selon l'une quelconque des revendications précédentes, dans lequel les particules intermétalliques sont des particules atomisées.

12. Composant coulissant selon l'une quelconque des revendications précédentes, dans lequel les particules intermétalliques forment entre 0,1 et 1,0% en poids du recouvrement.
